# EUROPEAN PATENT APPLICATION

(11) **EP 4 625 024 A1**
(43) Date of publication of application: **01.10.2025**
(21) Application number: 24775058.1
(22) Date of filing: 25.01.2024
(51) Int. Cl.: G02B 27/01, G02B 27/28, G02B 5/30, G02B 27/10, G06F 1/16, G02B 27/09, G02B 5/00

(54) **WEARABLE ELECTRONIC DEVICE INCLUDING POLARIZING REFLECTOR**

(30) Priority: 22.03.2023 KR 20230037475; 11.04.2023 KR 20230047656
(71) Applicant: Samsung Electronics Co., Ltd., Suwon-si, Gyeonggi-do 16677 (KR)
(72) Inventor: YOO, Chanhyung, Suwon-si Gyeonggi-do 16677 (KR); KIM, Nari, Suwon-si Gyeonggi-do 16677 (KR); PARK, Kyongtae, Suwon-si Gyeonggi-do 16677 (KR); JUNG, Hoyoung, Suwon-si Gyeonggi-do 16677 (KR)
(74) Representative: Gulde & Partner
(86) International application number: PCT/KR2024/001196
(87) International publication number: WO 2024/196010

(57) **Abstract**

According to an embodiment of the present disclosure, a wearable electronic device comprises: a light output module; a display member configured to output at least a portion of light output from the light output module to a first surface and transmit, to the first surface, light incident on a second surface opposite to the first surface; a first polarizing reflector disposed on the second surface and configured to reflect at least a portion of first leaked light, which is a portion of the light output from the light output module and is output to the outside through the second surface, to the first surface; a polarizing modulator disposed on the first polarizing reflector and configured to modulate and transmit at least a portion of a polarization component of second leaked light which is a portion of the first leaked light and has passed through the first polarizing reflector; and a second polarizing reflector disposed on the polarizing modulator and configured to reflect at least a portion of third leaked light, which is at least a portion of the second leaked light and has passed through the polarizing modulator, to the first surface. Various other embodiments may be possible.

## Description

### [Technical Field]

An embodiment(s) of the disclosure relates to an wearable electronic device, e.g., an electronic device including a polarizing reflector.

### [Background Art]

The growth of electronics, information, and communication technologies leads to integration of various functions into a single electronic device. For example, electronic devices (e.g., smartphones) pack the functionalities of a sound player, imaging device, and scheduler, as well as the communication functionality and, on top of that, may implement more various functions by having applications installed thereon. An electronic device may not only its equipped applications or stored functions but also access, wiredly or wirelessly, a server or another electronic device to receive, in real-time, various pieces of information.

As electronic devices are put to everyday use, users' demand for portability and usability of electronic devices may increase. To meet user demand, electronic devices that may be worn on the body, such as wristwatches and glasses (hereinafter referred to as "wearable electronic devices"), have been commercialized. Among the wearable electronic devices, electronic devices that may be worn on the user's face may be useful in implementing virtual reality or augmented reality. For example, the wearable electronic device may stereoscopically provide the image of the virtual space in the game played on TV or computer monitor and may implement virtual reality by blocking the real-world image. Other types of wearable electronic devices may implement virtual images while providing an environment in which the real-world image of the space where the user actually stays may be visually perceived, thereby implementing augmented reality to provide various pieces of visual information to the user. The 'real-world image of the space' may include, e.g., an image captured by a camera or an image transmitted through see-through optics. The 'virtual image' may include information about the space where the user resides and/or information about various things in the space.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Solution]

According to an embodiment of the disclosure, a wearable electronic device comprises a light output module. In an embodiment, the wearable electronic device comprises a display member configured to output at least a portion of light emitted from the light output module to a first surface, and to transmit light incident on a second surface opposite to the first surface to the first surface. In an embodiment, the wearable electronic device comprises a first polarization reflector disposed on the second surface and configured to reflect at least a portion of first leakage light, which is a portion of the light emitted from the light output module and output to an outside through the second surface, to the first surface. In an embodiment, the wearable electronic device comprises a polarization modulator disposed on the first polarization reflector and configured to modulate at least a portion of a polarization component of second leakage light, which is a portion of the first leakage light and has passed through the first polarization reflector, and to transmit the modulated light. And/or in an embodiment, the wearable electronic device comprises a second polarization reflector disposed on the polarization modulator and configured to reflect at least a portion of third leakage light, which is at least a portion of the second leakage light that has passed through the polarization modulator, to the first surface.

According to an embodiment of the disclosure, a wearable electronic device comprises a light output module. In an embodiment, the wearable electronic device comprises a display member configured to output at least a portion of light emitted from the light output module to a first surface, and to transmit light incident on a second surface opposite to the first surface to the first surface by including at least one diffractive optical element. In an embodiment, the wearable electronic device comprises a first polarization reflector disposed on the second surface and configured to reflect light of a first polarization component of first leakage light, which is a portion of the light emitted from the light output module and output to an outside through the second surface, to the first surface. In an embodiment, the wearable electronic device comprises a polarization modulator including a half-wave plate disposed on the first polarization reflector and a Faraday rotator disposed on the half-wave plate. In an embodiment, the polarization modulator is configured to modulate at least a portion of second leakage light which is a portion of the first leakage light and has passed through the first polarization reflector and to transmit the modulated light. And/or in an embodiment, the wearable electronic device comprises a second polarization reflector disposed on the polarization modulator and configured to reflect light of the first polarization component of the third leakage light transmitted through the polarization modulator to the first surface.

According to an embodiment of the disclosure, a method for operating a wearable electronic device including see-through optics as described below may comprise detecting brightness of an external environment. According to an embodiment of the disclosure, the method for operating the wearable electronic device including the see-through optics as described below may comprise calculating a control value. According to an embodiment of the disclosure, the method for operating the wearable electronic device including the see-through optics as described below may comprise adjusting transmittance.

### [Brief Description of Drawings]

The foregoing and other aspects, configurations, and/or advantages of an embodiment of the disclosure will be more apparent from the following detailed description taken in conjunction with the accompanying drawings.
FIG. 1 is a block diagram illustrating an electronic device in a network environment according to an embodiment of the disclosure;
FIG. 2 is a perspective view illustrating an internal configuration of a wearable electronic device according to an embodiment of the disclosure;
FIGS. 3 and 4 are views illustrating front and rear surfaces of a wearable electronic device according to an embodiment of the disclosure;
FIG. 5 is a view illustrating a portion of a wearable electronic device according to an embodiment of the disclosure;
FIG. 6 is a view illustrating a propagating path of light generated in a wearable electronic device according to an embodiment of the disclosure;
FIG. 7 is a view illustrating a propagating path of light incident on a wearable electronic device according to an embodiment of the disclosure; and
FIG. 8 is a view illustrating a portion of a wearable electronic device according to an embodiment of the disclosure.
FIG. 9 is a flowchart illustrating a method of adjusting transmittance by a wearable electronic device according to an embodiment of the disclosure.

Throughout the drawings, like reference numerals may be assigned to like parts, components, and/or structures.

### [Mode for Carrying out the Invention]

A wearable electronic device that implements augmented reality through see-through optics may visually provide information about the space where the user is staying and/or various objects in the space while providing an environment in which the user may recognize images or videos of the surrounding environment. For example, information regarding space and/or objects, stored information, and/or information received through a network, may be output in the form of light (e.g., visual information such as an image) by a wearable electronic device (e.g., a display) to be provided to the user via see-through optics. In the path through the see-through optics, a portion of the light may leak to the outside and be exposed to a third party rather than the user. For example, privacy invasion may be caused while using a wearable electronic device. As the light output from the wearable electronic device is not provided to the user and leaks to the outside, the user may not be provided with sufficiently clear or sufficiently bright visual information. For example, the light efficiency of the wearable electronic device may be lowered, making it difficult to implement augmented reality. Although the wearable electronic device may output light having a sufficiently large power to provide visual information to the user, this may reduce the power efficiency of the wearable electronic device.

To address the foregoing issues and/or shortcomings, at least, an embodiment of the disclosure may provide a wearable electronic device capable of suppressing invasion of privacy while providing augmented reality.

An embodiment of the disclosure may provide a wearable electronic device having good light efficiency by suppressing light leakage to the outside.

An embodiment of the disclosure may provide a wearable electronic device having good power efficiency by providing sufficiently clear and/or sufficiently bright visual information even when low-power light is used.

Objects of the disclosure are not limited to the foregoing, and other unmentioned objects would be apparent to one of ordinary skill in the art from the following description.

The following description taken in conjunction with the accompanying drawings may provide an understanding of various exemplary implementations of the disclosure, including claims and their equivalents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and brevity.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may be interpreted as including one or more of the surfaces of a component.

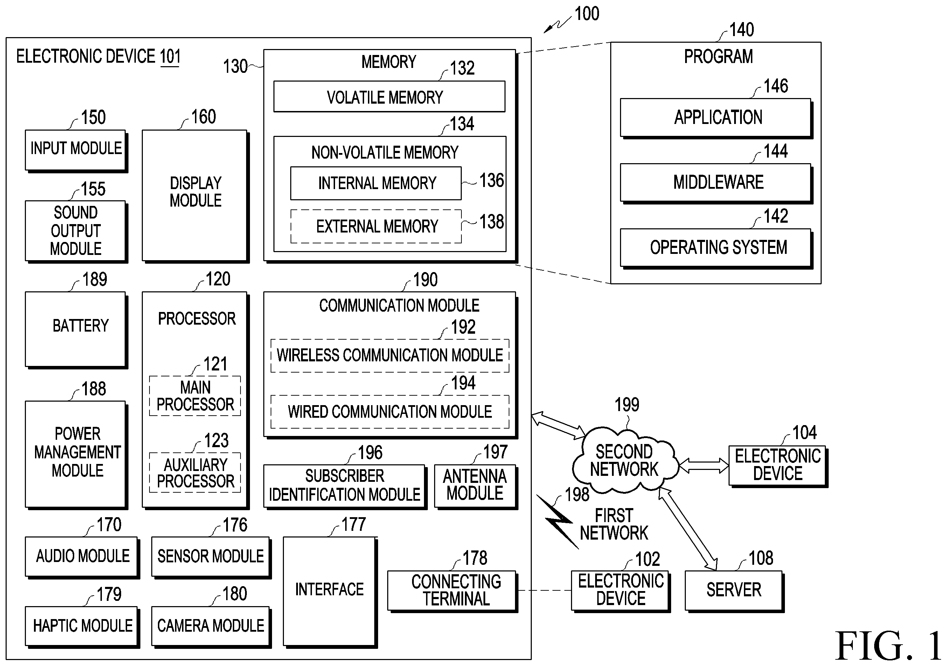

FIG. 1 is a block diagram illustrating an electronic device 101 in a network environment 100 according to an embodiment of the disclosure. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiment(s) of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

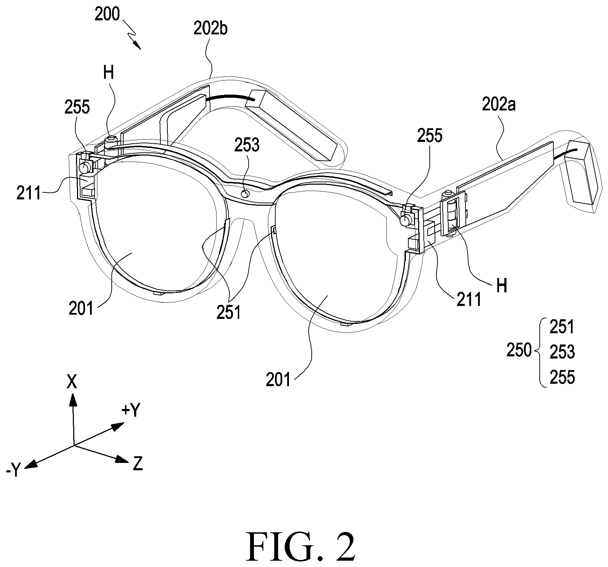

FIG. 2 is a perspective view illustrating an internal configuration of a wearable electronic device 200 according to an embodiment of the disclosure.

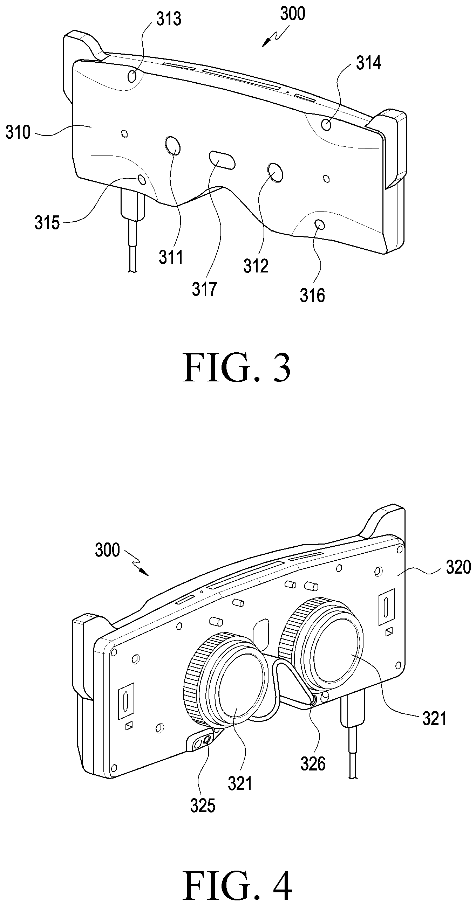

According to an embodiment of the disclosure, the wearable electronic device 200 of FIG. 2 (or the wearable electronic device 300 of FIG. 3 to be described below) may be substantially the same as the electronic device 101 of FIG. 1, and may be implemented to be worn on the user's body. In an embodiment, each of the external electronic devices 102 and 104 of FIG. 1 may be the same or different type of device as/from the electronic device 101 or the wearable electronic devices 200 and 300. According to an embodiment, all or some of the operations executed in the electronic device 101 or the wearable electronic devices 200 and 300 may be executed in one or more external electronic devices among the external electronic devices 102, 104, or 108. For example, if the electronic device 101 or wearable electronic device 200, 300 should perform a function or a service automatically, or in response to a request from a user or another device, the electronic device 101 or wearable electronic device 200, 300, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101 or wearable electronic device 200, 300. The electronic device 101 or wearable electronic device 200, 300 may provide the outcome, with or without further processing of the outcome, as at least part of a reply to the request. For example, the external electronic device 102 may render and transfer, to the electronic device 101 or wearable electronic device 200, 300, content data executed on an application, and the electronic device 101 or wearable electronic device 200, 300 receiving the data may output the content data to a display module. When the electronic device 101 or wearable electronic device 200, 300 detects the user's movement through, e.g., an inertial measurement unit sensor, the processor (e.g., the processor 120 of FIG. 1) of the electronic device 101 or wearable electronic device 200, 300 may correct the rendering data received from the external electronic device 102 based on the movement information and output the same on the display module. Alternatively, it may transfer the motion information to the external electronic device 102 and request rendering so that screen data is updated accordingly. According to various embodiments, the external electronic device 102 may be various types of devices, such as a case device capable of storing and charging the electronic device 101.

Referring to FIG. 2, according to an embodiment of the disclosure, a wearable electronic device 200 may include at least one of a light output module 211, a display member 201, and a camera module 250.

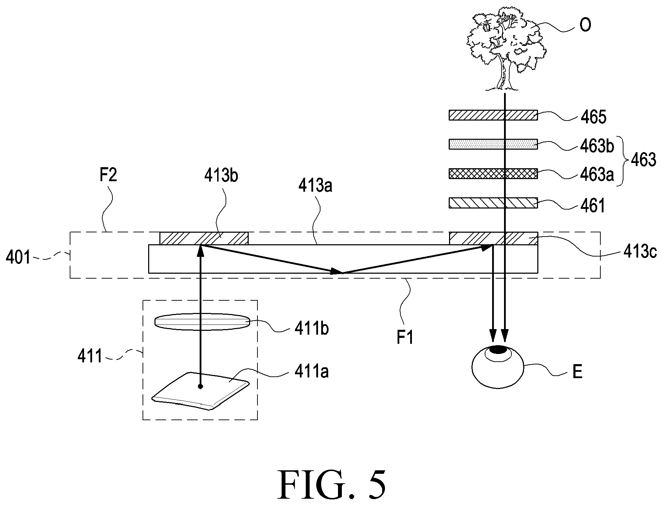

According to an embodiment of the disclosure, the light output module 211 may include a light source (e.g., the display panel 411a of FIG. 5) capable of outputting an image, and a lens (e.g., the lens 411b of FIG. 5) guiding the image to the display member 201. According to an embodiment of the disclosure, the light output module 211 may include at least one of a liquid crystal display (LCD), a digital mirror device (DMD), a liquid crystal on silicon (LCoS), an organic light emitting diode (OLED), or a micro light emitting diode (micro LED).

According to an embodiment of the disclosure, the display member 201 may include a light waveguide (e.g., the light waveguide 413a of FIG. 5). According to an embodiment of the disclosure, the image output from the light output module 211 incident on one end of the optical waveguide may propagate inside the optical waveguide and be provided to the user. According to an embodiment of the disclosure, the display member 201 may include at least one (e.g., the coupler(s) 413b and 413c of FIG. 5) of a diffractive optical element (DOE), a holographic optical element (HOE), or a reflective element provided in the light waveguide. For example, the display member 201 may guide the output image of the light output module 211 to the user's eyes by including at least one diffractive optical element, holographic optical element, or reflective element, and/or light waveguide.

According to an embodiment of the disclosure, the camera module 250 may capture still images and/or moving images. According to an embodiment, the camera module 250 may be disposed in a lens frame and may be disposed around the display member 201.

According to an embodiment of the disclosure, a first camera module 251 may capture and/or recognize the trajectory of the user's eye (e.g., pupil or iris) or gaze. According to an embodiment of the disclosure, the first camera module 251 may periodically or aperiodically transmit information related to the trajectory of the user's eye or gaze (e.g., trajectory information) to a processor (e.g., the processor 120 of FIG. 1).

According to an embodiment of the disclosure, a second camera module 253 may capture an external image.

According to an embodiment of the disclosure, a third camera module 255 may be used for hand detection and tracking, and recognition of the user's gesture (e.g., hand motion). According to an embodiment of the disclosure, the third camera module 255 may be used for 3 degrees of freedom (3DoF) or 6DoF head tracking, location (space, environment) recognition and/or movement recognition. The second camera module 253 may also be used for hand detection and tracking and recognition of the user's gesture. According to an embodiment of the disclosure, at least one of the first camera module 251 to the third camera module 255 may be replaced with a sensor module (e.g., a LiDAR sensor). For example, the sensor module may include at least one of a vertical cavity surface emitting laser (VCSEL), an infrared sensor, and/or a photodiode.

According to an embodiment, the wearable electronic device 200 may include a pair of display members 201 disposed side by side on their respective sides. For example, the user may wear the wearable electronic device 200 on the face, and the display members 201 may be disposed corresponding to any one of the user's naked eyes while being worn on the user's face. In an embodiment, when a pair of display members 201 are included, the wearable electronic device 200 may provide visual information to the user through any one of the display members 201 and/or through each of the display members 201.

According to an embodiment, the wearable electronic device 200 may include at least one wearing member 202a and 202b extending from the display member(s) 201 or rotatably coupled to the display member 201. In the illustrated embodiment, the wearing members 202a and 202b may be exemplified as a structure rotatably coupled (or connected) to the display member 201 by a hinge structure H. For example, the wearing members 202a and 202b may be in an overlapped or folded position with the display member 201, and in this case, it may be easy for the user to carry or store the wearable electronic device 200. In an embodiment, the user may easily wear the wearable electronic device 200 on the face at a position where the wearing members 202a and 202b are rotated by a designated angle (e.g., about 90 degrees) from the position overlapping the display member 201. For example, since the display member 201 is supported on the user's face and the wearing members 202a and 202b are supported on the side surfaces (e.g., the ears) of the user's head, the wearable electronic device 200 may be stably worn.

FIGS. 3 and 4 are views illustrating a front surface and a rear surface of a wearable electronic device 300 according to an embodiment.

Referring to FIGS. 3 and 4, in an embodiment, camera modules 311, 312, 313, 314, 315, and 316 for obtaining information related to the surrounding environment of the wearable electronic device 300 and/or a depth sensor 317 may be disposed on the first surface 310 of the housing.

In an embodiment, the camera modules 311 and 312 may obtain images related to the ambient environment of the wearable electronic device.

In an embodiment, the camera modules 313, 314, 315, and 316 may obtain images while the wearable electronic device is worn by the user. The camera modules 313, 314, 315, and 316 may be used for hand detection, tracking, and recognition of the user gesture (e.g., hand motion). The camera modules 313, 314, 315, and 316 may be used for 3DoF or 6DoF head tracking, position (space, environment) recognition, and/or movement recognition. In an embodiment, the camera modules 311 and 312 may be used for hand detection, tracking, and user gestures.

In an embodiment, the depth sensor 317 may be configured to transmit a signal and receive a signal reflected from an object and be used for identifying the distance to the object, such as time of flight (TOF). Alternatively or additionally to the depth sensor 317, the camera modules 313, 314, 315, and 316 may identify the distance to the object.

According to an embodiment, camera modules 325 and 326 for face recognition and/or a display 321 (and/or lens) may be disposed on the second surface 320 of the housing.

In an embodiment, the face recognition camera modules 325 and 326 adjacent to the display may be used for recognizing the user's face or may recognize and/or track both eyes of the user.

In an embodiment, the display 321 (and/or lens) may be disposed on the second surface 320 of the wearable electronic device 300. In an embodiment, the wearable electronic device 300 may not include the camera modules 315 and 316 among the plurality of camera modules 313, 314, 315, and 316. Although not shown in FIGS. 3 and 4, the wearable electronic device 300 may further include at least one of the components shown in FIG. 2.

As described above, according to an embodiment, the wearable electronic device 300 may have a form factor to be worn on the user's head. The wearable electronic device 300 may further include a strap and/or a wearing member (e.g., the wearing member 202a, 202b of FIG. 2) to be fixed on the user's body part. The wearable electronic device 300 may provide the user experience based on augmented reality, virtual reality, and/or mixed reality while worn on the user's head.

FIG. 5 is a view illustrating a portion of a wearable electronic device (e.g., the electronic device 101 of FIG. 1 and/or the wearable electronic devices 200 and 300 of FIGS. 2 to 4) according to an embodiment of the disclosure.

Referring to FIG. 5, the wearable electronic device 200 may include a light output module 411 (e.g., the light output module 211 of FIG. 2), a display member 401 (e.g., the display member 201 of FIG. 2), a first polarization reflector 461, a polarization modulator 463, and/or a second polarization reflector 465. The display member 401 may be, e.g., see-through optics that transmits light or an image related to an environment or an object O around the user and provides it to the user. In an embodiment, the display member 401 is see-through optics and may provide a path for directing or guiding light (e.g., visual information such as letters or images) emitted from the light output module 411 to the user's naked eye E. For example, by including see-through optics (e.g., the display member 401), the wearable electronic device 200 may provide an environment in which the user may visually perceive the surrounding space or object O, and may visually provide stored or received information to the users using the light output module 411 and the display member 401.

According to an embodiment, in visually providing various types of information to the user, a portion of the light output by the light output module 411 may leak to the external space. In an embodiment, the first polarization reflector 461, the polarization modulator 463, and/or the second polarization reflector 465 may reflect at least a portion of light leaking to the external space and provide it to the user, or may absorb a portion of light leaking to the external space. In an embodiment, when the first polarization reflector 461, the polarization modulator 463, and/or the second polarization reflector 465 reflect light leaking to the external space, the wearable electronic device 200 may provide visual information to the user more clearly or brighter. For example, the wearable electronic device 200 may have enhanced light efficiency or enhanced power efficiency. In an embodiment, when the first polarization reflector 461, the polarization modulator 463, and/or the second polarization reflector 465 reflect or absorb light leaking to the external space, the issue of privacy invasion that may occur while the wearable electronic device 200 provides visual information may be suppressed.

According to an embodiment, the light output module 411 may include a display panel 411a that outputs light (e.g., visual information such as an image), and at least one lens 411b. The display panel 411a may include, e.g., the above-described liquid crystal display, a digital mirror display, a silicon liquid crystal display, an organic light emitting diode, or a micro LED. In an embodiment, the lens 411b may guide or focus the light output from the display panel 411a to the display member 401. In an embodiment, in guiding or aligning light to the display member 401, the light output module 411 may further include a reflective member (e.g., a mirror) or a refractive member (e.g., a prism). For example, according to the direction in which the display panel 411a is aligned, the light output module 411 may output light in the direction toward the display member 401 by further including a reflective member or a refractive member.

According to an embodiment, the display member 401 may include a first surface F1 and a second surface F2 opposite to the first surface F1. In an embodiment, when the wearable electronic device 200 is worn on the user's face, the first surface F1 may be disposed substantially toward the user's face or the naked eye, and the second surface F2 may be disposed toward an external space (e.g., an environment around the user). In an embodiment, the image of the surrounding environment or the object O may be provided to the user by being incident on the second surface F2 and output through the first surface F1. For example, the display member 401 may transmit at least a portion of light incident on the second surface F2 to the first surface F1. In an embodiment, the light output from the light output module 411 may be provided to the user by propagating inside the display member 401 and being output through the first surface F1. For example, the display member 401 may guide the light output from the light output module 411 to the user's naked eye.

According to an embodiment, the display member 401 includes a light waveguide 413a and couplers 413b and 413c, thereby providing light output from the light output module 411 to the user. Out of the couplers 413b and 413c, the first coupler 413b may be provided at one end of the light waveguide 413a to be aligned with the light output module 411. For example, the light guided or focused by the lens 411b may be input to the light waveguide 413a through the first coupler 413b. Out of the couplers 413b and 413c, the second coupler 413c may be provided at the other end of the light waveguide 413a. In an embodiment, when the wearable electronic device 200 is worn on the user's face, the second coupler 413c may be substantially aligned with the user's naked eye. For example, the light guided or focused by the lens 411b may be input to the light waveguide 413a through the first coupler 413b and may propagate along the light waveguide 413a, and the light propagating through the light waveguide 413a may be provided to the user's naked eye by the second coupler 413c.

According to an embodiment, the first coupler 413b and/or the second coupler 413c may include at least one of a diffractive optical element, a holographic optical element, and/or a reflective element. For example, the light output from the light output module 411 may be input to the light waveguide 413a by the first coupler 413b, and the light propagating through the light waveguide 413a may be output to the first surface F1 by the second coupler 413c. When the propagating direction of light is adjusted by the first coupler 413b and/or the second coupler 413c, and/or when the light propagating through the light waveguide 413a is reflected in the light waveguide 413a, a portion of the light may leak to the outside. The wearable electronic device 200 according to an embodiment(s) of the disclosure includes the first polarization reflector 461, the polarization modulator 463, and/or the second polarization reflector 465, thereby suppressing leakage of light output from the light output module 411 to the outside. For example, the wearable electronic device 200 may have enhanced light efficiency and/or enhanced power efficiency by including a first polarization reflector 461, a polarized modulator 463, and/or a second polarization reflector 465.

In an embodiment(s) of the disclosure, the first polarization reflector 461, the polarization modulator 463, and/or the second polarization reflector 465 are illustrated to be disposed at a position corresponding to the second coupler 413c, but when there is a portion where light output from the light output module 411 may leak to the outside in the path propagating through the display member 401, the first polarization reflector 461, the polarization modulator 463, and/or the second polarization reflector 465 may be further extended or additionally disposed at a proper position. For example, the first polarization reflector 461, the polarization modulator 463, and/or the second polarization reflector 465 may be extended or additionally disposed to/at the position corresponding to the first coupler 413b or the light waveguide 413a. In an embodiment, the first polarization reflector 461, the polarization modulator 463, and/or the second polarization reflector 465 may be disposed on substantially the entire area of the second surface F2.

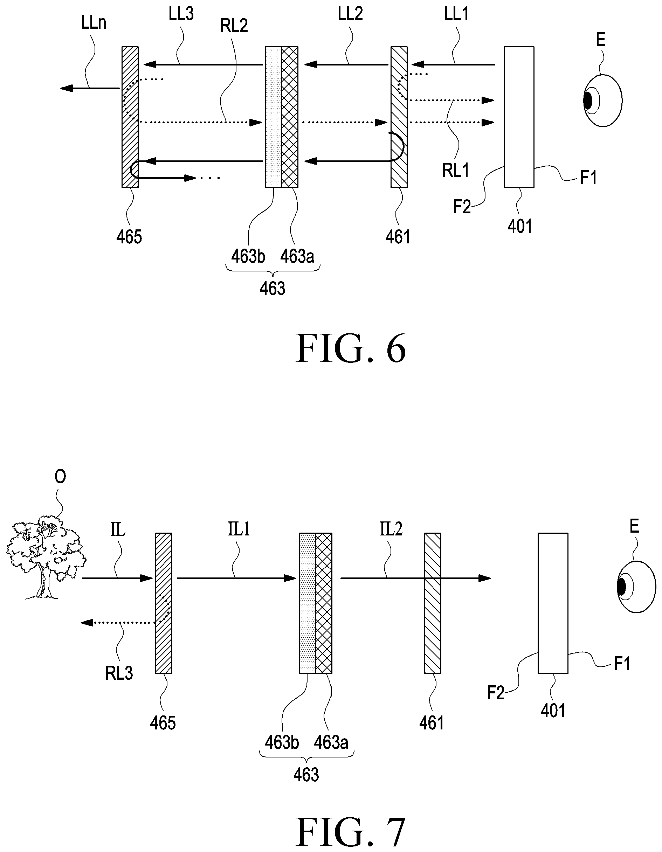

According to an embodiment, the first polarization reflector 461 may be disposed on one surface (e.g., the second surface F2) of the display member 401, and may be configured to reflect or absorb at least a portion of light (e.g., the first leakage light LL1 of FIG. 6) leaking out via the second coupler 413c. For example, when visual information to be provided to the user is provided to the user, a portion of the light output from the light output module 411 may be output to the second surface F2 via the second coupler 413c. The first polarization reflector 461 reflects the light output to the second surface F2 via the second coupler 413c to the first surface F1, thereby increasing the light efficiency of the wearable electronic device 200.

According to an embodiment, when the first polarization reflector 461 is configured to reflect light (e.g., horizontal linear polarization (p-pol)) of the first polarization component, the light (e.g., vertical linear polarization (s-pol)) of the second polarization component different from the first polarization component may pass through the first polarization reflector 461. In an embodiment, similar to the first polarization reflector 461, the second polarization reflector 465 may be configured to reflect the light of the first polarization component, and the polarization modulator 463 may modulate at least a portion of the light (e.g., the second leakage light LL2 of FIG. 6) transmitted through the first polarization reflector 461 into the light of the first polarization component and transmit the modulated light to the second polarization reflector 465. For simplicity of description, in the present embodiment, the light of the first polarization component may be referred to as horizontal linear polarization, and light of the second polarization component may be referred to as vertical linear polarization. However, it should be noted that the embodiment(s) of the disclosure are not limited thereto. In an embodiment, when light of a third polarization component, such as circular polarization or elliptical polarization, is incident on the first polarization reflector 461 (or the second polarization reflector 465), a portion of the light of the third polarization component may pass through the first polarization reflector 461 (or the second polarization reflector 465), and the remaining portion of the light of the third polarization component may be reflected by the first polarization reflector 461 (or the second polarization reflector 465).

According to an embodiment, the polarization modulator 463 may be disposed on the first polarization reflector 461. For example, the polarization modulator 463 may be disposed to substantially face the second surface F2 with the first polarization reflector 461 interposed therebetween. In an embodiment, the polarization modulator 463 may be disposed between the first polarization reflector 461 and the second polarization reflector 465 to modulate a polarization component of at least a portion of the light transmitted through the first polarization reflector 461. For example, the polarization modulator 463 may modulate at least a portion of light transmitted through the first polarization reflector 461 into the light of a polarization component reflected by the second polarization reflector 465. In an embodiment, the polarization modulator 463 may substantially transmit the light transmitted through the first polarization reflector 461 and modulate at least a portion of the polarization component of the light transmitted through the polarization modulator 463.

According to an embodiment, the second polarization reflector 465 may be disposed in the polarization modulator 463. For example, the second polarization reflector 465 may be disposed to substantially face the second surface F2 with the first polarization reflector 461 and the polarization modulator 463 interposed therebetween. In an embodiment, the second polarization reflector 465 may reflect at least a portion of the light (e.g., the third leakage light LL3 of FIG. 6) transmitted through the polarization modulator 463 to the second surface F2 and/or the first surface F1. For example, the second polarization reflector 465 may reflect the light of the first polarization component, and at least a portion of the light transmitted through the polarization modulator 463 may be light of the first polarization component.

As such, at least a portion of the light output from the light output module 411 but output to the outside by the second coupler 413c may be provided back to the first surface F1 and/or the user's naked eye by the first polarization reflector 461 and/or the second polarization reflector 465. Accordingly, when the wearable electronic device 200 provides visual information to the user, the light efficiency is enhanced, and a clear and bright image may be provided to the user even when less power is used. In an embodiment, since light leaking to the outside by the first polarization reflector 461 and/or the second polarization reflector 465 is suppressed, a privacy invasion issue that may occur while using the wearable electronic device 200 may be suppressed.

According to an embodiment, the polarization modulator 463 may include a half-wave plate 463a and a Faraday rotor 463b. The half-wave plate 463a may be substantially disposed on the first polarization reflector 461, and the Faraday rotor 463b may be disposed between the half-wave plate 463a and the second polarization reflector 465. In an embodiment, the half-wave plate 463a may change the polarization direction of light passing through the polarization modulator 463 to a designated angle in a range of about 90 degrees, and the Faraday rotor 463b may modulate the polarization axis of light passing through the polarization modulator 463 in a designated direction. The polarization axis angle or optical axis angle of the Faraday rotor 463b may be proportional to the applied magnetic field, the Verdet constant of the material implementing the Faraday rotor 463b, and/or the thickness of the Faraday rotor 463b.

According to an embodiment, when the optical axis angle of the Faraday rotor 463b is about twice the optical axis angle of the half-wave plate 463a, the polarization modulator 463 may transmit the light incident on the second surface F2 from the outside while substantially maintaining the polarization state. For example, the polarization modulator 463 may substantially maintain the polarization component and at least partially modulate the polarization component of light output from the second surface F2 and leaking to the outside when transmitting light incident on the second surface F2. In suppressing or mitigating privacy invasion, adding a polarizer to the light source (e.g., the display panel 411a) may be considered, but this may reduce light efficiency. In the embodiment(s) of the disclosure, the light output from the display panel 411a is guided to the user's naked eyes using the display member 401, but the polarization reflector(s) 461 and 465 and/or the polarization modulator 463 may be combined to suppress the leakage of light to the outside and enhance light efficiency.

The path of light (e.g., visual information) provided to the user via the display member 401 is described further with reference to FIGS. 6 and 7. In describing the embodiment referring to FIGS. 6 and 7, the configuration or drawings of the preceding embodiments may be referred to, and a description of a configuration in which light output from the light output module 411 propagates along a designed path may be omitted. Here, the "designed path" may refer to a path provided to the user's naked eye via the first coupler 413b, the light waveguide 413a, and/or the second coupler 413c.

FIG. 6 is a view illustrating a propagating path of light generated in a wearable electronic device (e.g., the wearable electronic device 200 of FIG. 2) according to an embodiment of the disclosure.

FIG. 6 illustrates, e.g., a path along which a portion of light output from the light output module 411 propagates when leaking to the outside after passing through the second coupler 413c. Referring to FIG. 6, the first leakage light LL1 leaking to the outside via the second coupler 413c may be substantially random polarization. When the first leakage light LL1 leaks to the outside, information visually provided to the user may be exposed to a third party. In an embodiment, when the first leakage light LL1 includes light of a first polarization component (e.g., a horizontal linear polarization component) and light of a second polarization component (e.g., a vertical linear polarization component), the first polarization reflector 461 may be configured to reflect the light of the first polarization component to the first surface F1. The first reflected light RL1 reflected by the first polarization reflector 461 may pass through the display member 401 and be provided to the user's naked eye E. For example, the first polarization reflector 461 may reflect a portion (e.g., about 50%) of the first leakage light LL1 and provide it to the user again. Therefore, when the wearable electronic device 200 provides visual information to the user, the first polarization reflector 461 may enhance light efficiency while suppressing personal information from being exposed to third parties.

In an embodiment, a portion (e.g., the light of the second polarization component, hereinafter, referred to as 'second leakage light LL2') not reflected by the first polarization reflector 461 of the first leakage light LL1 may pass through the first polarization reflector 461 and leak to the outside. When the first leakage light LL1 leaks to the outside, information visually provided to the user may be exposed to a third party. The polarization modulator 463, e.g., the half-wave plate 463a and the Faraday rotor 463b, may modulate at least a portion of the second leakage light LL2 into the light of the first polarization component and transmit the same. In an embodiment, similar to the first polarization reflector 461, the second polarization reflector 465 may reflect at least a portion of the light of the first polarization component to guide the light to the first surface F1. The second reflected light RL2 reflected by the second polarization reflector 465 may sequentially pass through the polarization modulator 463, the first polarization reflector 461, and/or the display member 401 and may be provided to the user's naked eye E. The second polarization reflector 465 may reflect about 18% of the first leakage light LL1 and provide the same back to the user. Therefore, when the wearable electronic device 200 provides visual information to the user, the second polarization reflector 465 may further suppress the exposure of personal information to a third party and enhance light efficiency. In an embodiment, a portion of the second reflected light RL2 may be reflected by the first polarization reflector 461 back to the outside. The light reflected by the first polarization reflector 461 and propagating to the outside may be reflected again in a direction toward the first surface F1 by the second polarization reflector 465, similar to the second leakage light LL2 and/or the third leakage light LL3.

According to an embodiment, a portion of the light output from the light output module 411 is not reflected and may pass through the second polarization reflector 465 and leak to the outside. The light LLn leaking to the outside may be identified by a third party, but the third party may not substantially read information provided through the light due to low brightness or clarity. For example, the wearable electronic device 200 includes polarization reflectors 461 and 465 and/or a polarization modulator 463, thereby suppressing the leakage of light output from the light output module 411 to the outside and contributing to protecting the user's personal information.

FIG. 7 is a view illustrating a propagating path of light incident on a wearable electronic device (e.g., the wearable electronic device 200 of FIG. 2) according to an embodiment of the disclosure.

FIG. 7 illustrates, e.g., a path along which light incident on the second surface F2 from the outside propagates. Referring to FIG. 7, the light incident on the second surface F2 from the outside is, e.g., light including visual information about the surrounding environment or object O, and may be provided to the user sequentially via the second polarization reflector 465, the polarization modulator 463, the first polarization reflector 461, and/or the display member 401. In an embodiment, the incident light IL incident from the outside may first pass through the second polarization reflector 465. When the second polarization reflector 465 is configured to reflect the light of the first polarization component, the light of the first polarization component (e.g., the light indicated by 'RL3') of the incident light IL may not pass through the second polarization reflector 465 but may be reflected. For example, the first incident light IL1 transmitted through the second polarization reflector 465 may be light of a polarization component (e.g., the second polarization component) that is substantially different from the first polarization component.

According to an embodiment, the first incident light IL1 may sequentially pass through the polarization modulator 463, e.g., the Faraday rotor 463b and the half-wave plate 463a. The arrangement of the Faraday rotor 463b and the half-wave plate 463a may substantially maintain the polarization component of light incident on the second surface F2 from the outside. For example, the second incident light IL2 passing through the polarization modulator 463 and propagating to the first polarization reflector 461 may be light of a polarization component that is substantially different from the first polarization component. In an embodiment, since the first polarization reflector 461 is configured to reflect the light of the first polarization component, the second incident light IL2 may substantially pass through the first polarization reflector 461 and the display member 401 to be provided to the user's naked eye. In an embodiment, the polarization components reflected by the first polarization reflector 461 and the second polarization reflector 465 may be different from each other. For example, in the polarization modulator 463, even when the polarization components reflected by the first polarization reflector 461 and the second polarization reflector 465 differ according to the alignment of the polarization axis of the Faraday rotor 463b and the half-wave plate 463a, the light leaking to the outside may be reflected by the first polarization reflector 461 and/or the second polarization reflector 465 and guided to the user's naked eye E. In an embodiment, according to the alignment of the polarization axis of the Faraday rotor 463b and the half-wave plate 463a, the first polarization reflector 461 and/or the second polarization reflector 465 may be configured to reflect at least a portion of light of the third polarization component (e.g., circular polarization or elliptical polarization) to guide the light to the user's naked eye E.

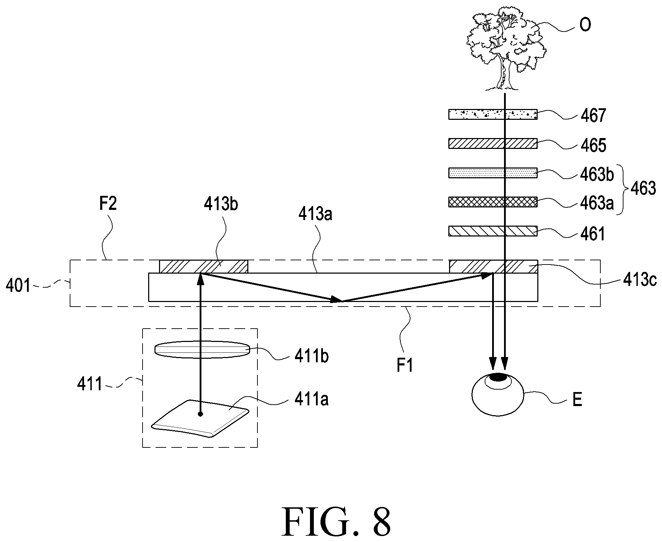

FIG. 8 is a view illustrating a portion of a wearable electronic device (e.g., the wearable electronic device 200 of FIG. 2) according to an embodiment of the disclosure.

The embodiment of FIG. 8 may be different from the embodiment of FIG. 5 in the configuration including the absorptive polarizer 467. In describing the embodiment of FIG. 8, detailed descriptions of configurations that may be easily understood through the embodiment of FIG. 5 may be omitted.

Referring to FIG. 8, the wearable electronic device 200 may further include an absorptive polarizer 467 disposed on the second polarization reflector 465 on the second surface F2. The absorptive polarizer 467 may absorb, e.g., the light that is a portion of the light output from the light output module 411 and leaking to the second surface F2 and has passed through the second polarization reflector 465. For example, while using the wearable electronic device 200, the absorptive polarizer 467 suppresses the exposure of the user's personal information to the outside, so that the privacy invasion issue may be substantially resolved. In an embodiment, the polarization component of light absorbed by the absorptive polarizer 467 may be substantially the same as the polarization component of light transmitted through the second polarization reflector 465. In an embodiment, the absorptive polarizer 467 may absorb the third reflected light indicated by 'RL3' of FIG. 7. For example, when light incident on the second surface F2 from the outside is reflected by the second polarization reflector 465, the surface of the display member 401 may be seen as a mirror surface, but the absorptive polarizer 467 may be disposed to absorb the third reflected light RL3.

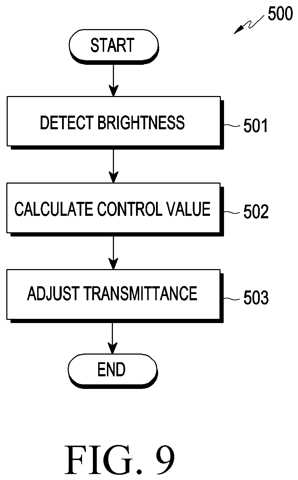

According to an embodiment, when the ambient illuminance is quite high in an environment using the wearable electronic device 200, the light output from the light output module 411 may not be recognized by the user. In this case, visual information output from the light output module 411 may be easily identified by the user by reducing the transmittance of light incident on the display member 401 (e.g., the second surface F2). In an embodiment, the transmittance of light incident on the display member 401 from the outside may be adjusted using the alignment of the polarization axis of the Faraday rotor 463b and/or the half-wave plate 463a. In a structure in which the polarization reflectors 461 and 465 and/or the polarization modulator 463 are disposed, the transmittance of light incident from the outside may be adjusted in the range of about 0% to 50%. A configuration of adjusting the transmittance of light incident from the outside by the wearable electronic device 200 is described with reference to FIG. 9.

FIG. 9 is a flowchart illustrating a method 500 of adjusting the transmittance by a wearable electronic device (e.g., the electronic device 101 of FIG. 1 and/or the wearable electronic device 200 of FIG. 2) according to an embodiment of the disclosure.

Referring to FIG. 9, the method 500 of adjusting the transmittance may include operation 501 for detecting brightness, operation 502 for calculating a control value, and operation 503 for adjusting the transmittance. According to an embodiment, in operation 501, the wearable electronic device 200 and/or the processor 120 of FIG. 1 may detect the brightness of the surrounding environment using the sensor module 176 of FIG. 1 (e.g., an illuminance sensor). In an embodiment, the instructions stored in the memory 130 of FIG. 1 may be configured to, when executed by the processor 120, cause the wearable electronic device 200 to obtain brightness information using an illuminance sensor. In operation 502, the processor 120 may calculate a control value regarding alignment of the polarization axis of the Faraday rotor 463b and/or the half-wave plate 463a based on brightness information obtained using the illuminance sensor. In an embodiment, the instructions stored in the memory 130 of FIG. 1 may be configured to, when executed by the processor 120, cause the wearable electronic device 200 to calculate a control value regarding the alignment of the polarization axis of the Faraday rotor 463b and/or the half-wave plate 463a based on the obtained brightness information. In calculating the control value, the brightness of light output from the light output module 411 and the brightness of the surrounding environment may be compared with each other. In an embodiment, the control value corresponding to the brightness of the surrounding environment may be stored in the memory 130 of FIG. 1 as information in the form of a table, and in this case, the processor 120 may select the control value stored in the memory 130 of FIG. 1 based on the detected brightness information. In an embodiment, in operation 503, according to the calculated control value, the processor may adjust a relative alignment state by rotating at least one of the Faraday rotor 463b and the half-wave plate 463a or adjust the magnetic field applied to the Faraday rotor 463b. Accordingly, the transmittance of the light incident on the second surface F2 from the outside by the wearable electronic device 200 (e.g., the polarization modulator 463) may be adjusted. In an embodiment, the instructions stored in the memory 130 of FIG. 1 may be configured to, when executed by the processor 120, cause the wearable electronic device 200 to adjust the relative alignment state of the Faraday rotor 463b and the half-wave plate 463a or the magnetic field applied to the Faraday rotor 463b according to the calculated or selected control value. Here, "adjusting the relative alignment state of the Faraday rotor 463b and the half-wave plate 463a" or "adjusting the magnetic field applied to the Faraday rotor 463b" may refer to adjusting the transmittance of the wearable electronic device 200 (e.g., the display member 401 of FIG. 5). In an embodiment, when the external illuminance is high, the transmittance of the wearable electronic device 200 (e.g., the display member 401 of FIG. 5) may be controlled to decrease, and as the external illuminance gradually decreases, the transmittance of the wearable electronic device 200 may be controlled to increase.

As described above, the wearable electronic device (e.g., the electronic devices 101, 102, 104 of FIG. 1 and/or the wearable electronic device 200, 300 of FIGS. 2 to 4) according to an embodiment(s) of the disclosure may suppress or enhance concerns about privacy invasion by suppressing the leakage of light output from the light output module (e.g., the light output module 211 and 411 of FIG. 2 or 5) while implementing augmented reality. In an embodiment, the light efficiency of the light output module may be enhanced and the power efficiency of the wearable electronic device may be enhanced by reflecting or guiding the light output from the light output module and propagating along an undesigned path by the polarization reflector (e.g., the polarization reflector 461 and 465 of FIG. 5) and/or the polarization modulator (e.g., the polarization modulator 463 of FIG. 5) to the user's naked eye. "light efficiency is enhanced" may indicate that the brightness or clarity of visual information provided to the user is adequately maintained while effectively reducing power consumption.

Effects of the disclosure are not limited to the foregoing, and other unmentioned effects would be apparent to one of ordinary skill in the art from the description of the foregoing embodiment(s).

According to an embodiment of the disclosure, a wearable electronic device (e.g., the electronic device 101, 102, 104 of FIG. 1 and/or the wearable electronic device 200, 300 of FIGS. 2 to 4) comprises a light output module (e.g., the light output module 211, 411 of FIG. 2 or FIG. 5), a display member (e.g., the display member 201, 401 of FIG. 2 or FIG. 5) configured to output at least a portion of light emitted from the light output module to a first surface (e.g., the first surface F1 of FIG. 5), and to transmit light incident on a second surface (e.g., the second surface F2 of FIG. 5) opposite to the first surface to the first surface, a first polarization reflector (e.g., the first polarization reflector 461 of FIG. 5) disposed on the second surface and configured to reflect at least a portion of first leakage light (e.g., the first leakage light LL1 of FIG. 6), which is a portion of the light emitted from the light output module and output to an outside through the second surface, to the first surface, a polarization modulator (e.g., the polarization modulator 463 of FIG. 5) disposed on the first polarization reflector and configured to modulate at least a portion of a polarization component of second leakage light (e.g., the second leakage light LL2 of FIG. 6), which is a portion of the first leakage light and has passed through the first polarization reflector, and to transmit the modulated light, and a second polarization reflector (e.g., the second polarization reflector 465 of FIG. 5) disposed on the polarization modulator and configured to reflect at least a portion of third leakage light (e.g., the third leakage light LL3 of FIG. 6), which is at least a portion of the second leakage light that has passed through the polarization modulator, to the first surface.

According to an embodiment, the first polarization reflector may be configured to reflect light of a first polarization component of the first leakage light to the first surface.

According to an embodiment, the polarization modulator may modulate at least a portion of the second leakage light into light of the first polarization component, and the second polarization reflector may be configured to reflect light of the first polarization component of the third leakage light to the first surface.

According to an embodiment, the polarization modulator may be configured to transmit at least a portion of light incident on the second surface from the outside.

According to an embodiment, the polarization modulator may include a half-wave plate (e.g., the half-wave plate 463a of FIG. 5) disposed on the first polarization reflector and a Faraday rotator (e.g., the Faraday rotator 463b of FIG. 5) disposed between the half-wave plate and the second polarization reflector.

According to an embodiment, an optical axis angle of the Faraday rotator may be set to be twice an optical axis angle of the half-wave plate.

According to an embodiment, the wearable electronic device may further comprise an absorptive polarizer (e.g., the absorptive polarizer 467 of FIG. 8) disposed on the second polarization reflector. In an embodiment, the absorptive polarizer may be configured to absorb at least a portion of light, which is a portion of the third leakage light and has passed through the second polarization reflector.

According to an embodiment, the display member may include a light waveguide (e.g., the light waveguide 413a of FIG. 5), a first coupler (e.g., the first coupler 413b of FIG. 5) provided at one end of the light waveguide and configured to guide at least a portion of light emitted from the light output module into the light waveguide, and a second coupler (e.g., the second coupler 413c of FIG. 5) provided at another end of the light waveguide and configured to output light traveling through the light waveguide to the first surface.

According to an embodiment, the first coupler or the second coupler may include at least one of a diffractive optical element, a holographic optical element, or a reflective element.

According to an embodiment, the wearable electronic device may further comprise an illuminance sensor (e.g., the sensor module 176 of FIG. 1) configured to detect brightness of an external environment, memory storing instructions and a processor (e.g., the processor 120 of FIG. 1). In an embodiment, the instructions may be configured to, when executed by the processor, cause the electronic device to adjust a transmittance of the polarization modulator with respect to light incident on the second surface from the outside, based on brightness information detected by the illuminance sensor.

According to an embodiment, the display member may include see-through optics.

According to an embodiment, a pair of the display members may be arranged side-by-side on respective sides.

According to an embodiment, the electronic device may further comprise at least one wearing member (e.g., the wearing member 202a, 202b of FIG. 2) extending from or rotatably coupled to the display member.

According to an embodiment of the disclosure, a wearable electronic device (e.g., the electronic device 101, 102, 104 of FIG. 1 and/or the wearable electronic device 200, 300 of FIGS. 2 to 4) comprises a light output module (e.g., the light output module 211, 411 of FIG. 2 or FIG. 5), a display member (e.g., the display member 201, 401 of FIG. 2 or FIG. 5) configured to output at least a portion of light emitted from the light output module to a first surface (e.g., the first surface F1 of FIG. 5) and to transmit light incident on a second surface (e.g., the second surface F2 of FIG. 5) opposite to the first surface to the first surface, by including at least one diffractive optical element (e.g., the coupler(s) 413b, 413c of FIG. 5), a first polarization reflector (e.g., the first polarization reflector 461 of FIG. 5) disposed on the second surface and configured to reflect light of a first polarization component of first leakage light (e.g., the first leakage light LL1 of FIG. 6), which is a portion of the light emitted from the light output module and output to an outside through the second surface, to the first surface, a polarization modulator (e.g., the polarization modulator 463 of FIG. 5) including a half-wave plate (e.g., the half-wave plate 463a of FIG. 5) disposed on the first polarization reflector and a Faraday rotator (e.g., the Faraday rotator 463b of FIG. 5) disposed on the half-wave plate, and configured to modulate at least a portion of second leakage light (e.g., the second leakage light LL2 of FIG. 6), which is a portion of the first leakage light that has passed through the first polarization reflector, into light of the first polarization component and to transmit the modulated light, and a second polarization reflector (e.g., the second polarization reflector 465 of FIG. 5) disposed on the polarization modulator and configured to reflect light of the first polarization component of third leakage light (e.g., the third leakage light LL3 of FIG. 6) that has passed through the polarization modulator, to the first surface.

According to an embodiment, an optical axis angle of the Faraday rotator may be set to be twice an optical axis angle of the half-wave plate.

According to an embodiment, the wearable electronic device may further comprise an absorptive polarizer (e.g., the absorptive polarizer 467 of FIG. 8) disposed on the second polarization reflector. In an embodiment, the absorptive polarizer may be configured to absorb at least a portion of light, which is a portion of the third leakage light and has passed through the second polarization reflector.

According to an embodiment, the display member may include a light waveguide (e.g., the light waveguide 413a of FIG. 5), a first coupler (e.g., the first coupler 413b of FIG. 5), which is any one of at least one diffractive optical element and is provided at one end of the light waveguide and configured to guide at least a portion of light emitted from the light output module into the light waveguide, and a second coupler (e.g., the second coupler 413c of FIG. 5), which is another one of the at least one diffractive optical element and is provided at another end of the light waveguide and configured to output light traveling through the light waveguide to the first surface.

According to an embodiment, the display member may include see-through optics.

According to an embodiment, a pair of the display members may be arranged side-by-side on respective sides.

According to an embodiment, the wearable electronic device may further comprise at least one wearing member (e.g., the wearing member 202a, 202b of FIG. 2) extending from or rotatably coupled to the display member.

According to an embodiment of the disclosure, a method for operating a wearable electronic device including see-through optics as described above may comprise detecting brightness of an external environment, calculating a control value, and/or adjusting transmittance.

In an embodiment, in detecting the brightness of the external environment, the wearable electronic device and/or the processor may use an illuminance sensor.

In an embodiment, calculating the control value may include comparing a brightness of a screen output through the see-through optics or light emitted from a light output module of the wearable electronic device with the detected brightness of the external environment.

In an embodiment, calculating the control value may include selecting a control value stored in memory of the wearable electronic device based on the detected brightness of the external environment.

In an embodiment, adjusting the transmittance may include rotating at least one of a Faraday rotator and a half-wave plate of the wearable electronic device based on the calculated control value.

In an embodiment, adjusting the transmittance may include decreasing a transmittance of light incident from an outside as the detected brightness of the external environment increases.

While the disclosure has been described and shown in connection with an embodiment thereof, it should be appreciated that an embodiment is intended as limiting the invention but as illustrative. It will be apparent to one of ordinary skill in the art that various changes may be made in form and detail without departing from the overall scope of the disclosure, including the appended claims and their equivalents.

## Claims

1. A wearable electronic device (101; 200; 300), comprising:
a light output module (211; 411);
a display member (201; 401) configured to output at least a portion of light emitted from the light output module to a first surface (F1), and to transmit light incident on a second surface (F2) opposite to the first surface to the first surface;
a first polarization reflector (461) disposed on the second surface and configured to reflect at least a portion of first leakage light (LL1), which is a portion of the light emitted from the light output module and output to an outside through the second surface, to the first surface;
a polarization modulator (463) disposed on the first polarization reflector and configured to modulate at least a portion of a polarization component of second leakage light (LL2), which is a portion of the first leakage light and has passed through the first polarization reflector, and to transmit the modulated light; and
a second polarization reflector (465) disposed on the polarization modulator and configured to reflect at least a portion of third leakage light (LL3), which is at least a portion of the second leakage light that has passed through the polarization modulator, to the first surface.

2. The wearable electronic device of claim 1, wherein the first polarization reflector is configured to reflect light of a first polarization component of the first leakage light to the first surface.

3. The wearable electronic device of claim 2, wherein the polarization modulator modulates at least a portion of the second leakage light into light of the first polarization component, and the second polarization reflector is configured to reflect light of the first polarization component of the third leakage light to the first surface.

4. The wearable electronic device of any one of claims 1 to 3, wherein the polarization modulator is configured to transmit at least a portion of light incident on the second surface from the outside.

5. The wearable electronic device of any one of claims 1 to 4, wherein the polarization modulator includes:
a half-wave plate (463a) disposed on the first polarization reflector; and
a Faraday rotator (463b) disposed between the half-wave plate and the second polarization reflector.

6. The wearable electronic device of claim 5, wherein an optical axis angle of the Faraday rotator is set to be twice an optical axis angle of the half-wave plate.

7. The wearable electronic device of any one of claims 1 to 6, further comprising an absorptive polarizer (467) disposed on the second polarization reflector,
wherein the absorptive polarizer is configured to absorb at least a portion of light, which is a portion of the third leakage light and has passed through the second polarization reflector.

8. The wearable electronic device of any one of claims 1 to 7, wherein the display member includes:
a light waveguide (413a);
a first coupler (413b) provided at one end of the light waveguide and configured to guide at least a portion of light emitted from the light output module into the light waveguide; and
a second coupler (413c) provided at another end of the light waveguide and configured to output light traveling through the light waveguide to the first surface.

9. The wearable electronic device of claim 8, wherein the first coupler or the second coupler includes at least one of a diffractive optical element, a holographic optical element, or a reflective element.

10. The wearable electronic device of any one of claims 1 to 9, further comprising:
an illuminance sensor (176) configured to detect brightness of an external environment;
memory storing instructions; and
a processor (120),
wherein the instructions are configured to, when executed by the processor, cause the electronic device to adjust a transmittance of the polarization modulator with respect to light incident on the second surface from the outside, based on brightness information detected by the illuminance sensor.

11. The wearable electronic device of any one of claims 1 to 10, wherein the display member includes see-through optics.

12. The wearable electronic device of any one of claims 1 to 11, wherein a pair of the display members are arranged side-by-side on respective sides.

13. The wearable electronic device of any one of claims 1 to 12, further comprising at least one wearing member (202a, 202b) extending from or rotatably coupled to the display member.
